# EUROPÄISCHE PATENTSCHRIFT

(11) **EP 2 269 901 B1**
(45) Veröffentlichungstag und Bekanntmachung des Hinweises auf die Patenterteilung: **20.03.2013**
(21) Anmeldenummer: 10168218.5
(22) Anmeldetag: 02.07.2010
(51) Int. Cl.: B62J 6/04

(54) **Balkenförmige Rückleuchte für ein Zweirad**
Bar-shaped rear light for a bicycle
Feu arrière en forme de barre d'un deux roues

(30) Priorität: 03.07.2009 DE 102009031834
(43) Veröffentlichungstag der Anmeldung: 05.01.2011
(73) Patentinhaber: Busch & Müller KG, 58540 Meinerzhagen (DE)
(72) Erfinder:
(74) Vertreter: Heine, Christian Klaus

(56) Entgegenhaltungen:
- EP-A2- 0 990 579
- DE-U1-202007 012 416

## Beschreibung

Die vorliegende Erfindung betrifft eine Rückleuchte für ein Zweirad, und zwar vorzugsweise eine Rückleuchte für ein Fahrrad, mit einem integrierten Lichtleiter.

Rückleuchten sind in großer Zahl bekannt und weisen im Allgemeinen eine fast punktförmige Lichtquelle auf. Meist sind in Rückleuchten auch reflektierende Flächen, sogenannte Rückstrahler in enger räumlicher Beziehung zur Lichtquelle integriert. Rückleuchten weisen zur Erfüllung gesetzlicher Vorschriften und zur Erhöhung der Sicherheit des Fahrers bestimmte Abstrahlcharakteristiken und Intensitätsverteilungen auf, die es unter anderem vorschreiben, dass die Rückleuchten auch aus Richtungen quer zur Fahrtrichtung erkennbar sind. Ein Beispiel für eine solche Rückleuchte ist aus der DE 10 2006 023 873 A1 bekannt.

Für einen sich bei Dunkelheit von hinten einem Fahrrad mit leuchtender Rückleuchte nähernden Verkehrsteilnehmer ist es schwer möglich die Entfernung zum Fahrrad einzuschätzen. Er kann fast nur aufgrund der Lichtintensität, deren absoluten Wert er aber nicht kennt, die Entfernung zum Fahrrad einschätzen. So sieht ein sich von hinten nähernder Verkehrsteilnehmer zuerst nur ein punktförmiges Licht, welches beim Näherkommen für den Verkehrsteilnehmer heller erscheint. Aus diesem Intensitätsanstieg und in einem geringen Maße auch durch die Fähigkeit zum Stereosehen kann der Verkehrsteilnehmer den Abstand zum Fahrrad abschätzen.

Moderne Leuchtdioden hoher Leistung bieten inzwischen die Möglichkeit, selbst bei Zweirädern so helle Rückleuchten anzuwenden, dass neben der Erfüllung der gesetzlichen Vorschriften die Sicherheit noch durch weitere günstige Lichtabstrahleigenschaften erhöht werden kann. Aus dem Kraftfahrzeugbereich sind Lichtleiter bekannt, die das Licht einer Lichtquelle verteilen. In der DE 195 75 861 A1 ist ein Lichtleiter beschrieben, der mit Hilfe von Reflexion an der Lichtleiteroberfläche und in den Lichtleiter integrierten Prismen die Lichtquelle als Vielzahl von Punkten und damit quasi flächig erscheinen lässt. Aus der DE 20 2007 012416 U1 und aus der EP 0 990 579 ist eine Fahrradrückleuchte mit einem Lichtleiter bekannt, in dem das Licht durch Streuung abgelenkt wird.

Vor diesem Hintergrund ist es Aufgabe der vorliegenden Erfindung, eine Rückleuchte zu schaffen, die den Eindruck einer linienförmigen oder flächigen Lichtquelle für ein Zweirad vermittelt. Auf diese Weise soll die Rückleuchte besser sichtbar sein und eine bessere Abstandseinschätzung für sich von hinten nähernde Verkehrsteilnehmer bieten. Weitere Aufgabe ist es, eine besonders flache Rückleuchte mit solchen Eigenschaften zu schaffen.

Zur Lösung dieser Aufgabe dient eine Rückleuchte gemäß dem Anspruch 1. Vorteilhafte Ausgestaltungen sind in den abhängigen Ansprüchen angegeben.

Eine erfindungsgemäße Rückleuchte für ein Zweirad enthält mindestens eine Leuchtdiode mit einer Hauptabstrahlrichtung und mindestens einen der Leuchtdiode zugeordneten Lichtleiter, der sich in der Hauptabstrahlrichtung vor der Leuchtdiode befindet und im wesentlichen in einer Ebene senkrecht zur Hauptabstrahlrichtung angeordnet ist, wobei der Lichtleiter so ausgebildet ist, dass er zumindest einen Teil des in der Leuchtdiode erzeugbaren Lichtes seitlich ablenkt und in verschiedene voneinander beabstandete Teillichtbündel unterteilt wieder umlenkt mit einer vorgebbaren Intensitätsverteilung in einen vorgebbaren Winkelbereich um die Hauptabstrahlrichtung. Bei leuchtender Rückleuchte ergibt sich so für den Betrachter ein Bild, als hätte die Rückleuchte mehrere nebeneinander angeordnete Lichtquellen. Aus einiger Entfernung erscheint die Leuchte quasi balkenförmig. Ein solcher Lichtbalken erlaubt es einem Verkehrsteilnehmer aufgrund seiner vom Abstand abhängigen scheinbaren Winkelausdehnung leichter als ein punktförmiges Licht, den Abstand zu der Rückleuchte einzuschätzen.

Der Lichtleiter weist eine im Wesentlichen ebene Außenseite auf und eine von der Leuchtdiode ausgehend gestufte Innenseite aus einer Mehrzahl von etwa parallel zu der Außenseite mit abnehmenden Abständen verlaufenden ebenen Abschnitten, die durch gekrümmte Abschnitte mit einer vorgebbaren Krümmung miteinander verbunden sind, so dass ebene und gekrümmte Abschnitte eine Art Treppe bilden, und wobei in der Außenseite in der Hauptabstrahlrichtung vor der Leuchtdiode eine Aussparung ausgebildet ist, deren Grenzflächen in einem solchen Winkel zur Hauptabstrahlrichtung verlaufen und eine solche Form und Tiefe haben, dass von der Leuchtdiode ausgesandtes Licht in den Lichtleiter totalreflektiert wird, und zwar vorzugsweise etwa parallel zur Außenseite des Lichtleiters, so dass Licht auf jeden gekrümmten Abschnitt fällt und dort mit einer der Krümmung entsprechenden Verteilung in Richtung Außenseite totalreflektiert wird, so dass es aus der Außenseite austritt. Bevorzugt wird das Licht etwa homogen in dem Lichtleiter verteilt und etwa gleich viel Licht von jedem gekrümmten Abschnitt ausgestrahlt. Die erfindungsgemäße Anordnung ermöglicht eine besonders verlustarme Verteilung des Lichts, weil das Licht nur einmal an einer Grenzfläche in den Lichtleiter eintritt, auch nur einmal austritt und nur zweimal totalreflektiert wird. So sind die Verluste trotz einer breiten Verteilung des Lichtes zu einer quasi balkenförmigen Abstrahlung kaum größer als bei üblichen Optiken wie z. B. Streuscheiben und dergleichen bei Rückleuchten. Die direkte Verwendung der ebenen Außenseite des Lichtleiters als Außenseite der Rückleuchte im Lichtaustrittsbereich ohne zusätzliche Abdeckung oder dergleichen trägt ebenfalls zu einer fast verlustfreien Abstrahlung bei.

Heutige Leuchtdioden besitzen eine hohe Leuchtkraft, wobei das abgestrahlte Licht eine gewisse Abstrahlcharakteristik aufweist. Die Richtung, die die höchste Lichtintensität aufweist, wird als Hauptabstrahlrichtung bezeichnet und liegt meistens orthogonal zu einer Lichtaustrittsfläche einer Leuchtdiode. Erfindungsgemäß ist der Leuchtdiode ein Lichtleiter zugeordnet, der in der Hauptstrahlrichtung vor der Leuchtdiode angeordnet ist. Der Lichtleiter ist im Wesentlichen in einer Ebene senkrecht zur Hauptstrahlrichtung angeordnet, so dass die Dimensionierung des Lichtleiters in der Hauptstrahlrichtung möglichst klein ist. Auch der Abstand zur Leuchtdiode kann sehr klein sein.

Der Lichtleiter besitzt eine ebene und glatte Außenseite, die z. B. eine einfache Reinigung erlaubt, und eine stufenförmige Innenseite. Die Außenseite des Lichtleiters kann gleichzeitig die Außenseite der Rückleuchte bilden. Als außen wird das Äußere der Rückleuchte und damit die von der Leuchtdiode wegweisende Seite verstanden und als innen die zur Leuchtdiode hinweisende Seite. Die ebene Außenseite ermöglicht eine in Hauptabstrahlrichtung sehr flache Bauweise des Lichtleiters.

Der Bereich, in dem die Hauptabstrahlrichtung die stufenförmige Innenseite des Lichtleiters schneidet und das Licht der Leuchtdiode mit geringen Verlusten in den Lichtleiter einkoppelt, wird als Eintrittsfläche bezeichnet. Ausgehend von der Eintrittsfläche ist die stufenförmige Innenseite mit einer Mehrzahl von etwa parallel zur Außenseite verlaufenden ebenen Abschnitten und die ebenen Abschnitte verbindenden gekrümmten Abschnitten abgestuft. Die ebenen Abschnitte weisen dabei mit zunehmendem Abstand zu der Eintrittsfläche einen geringeren Abstand zu der ebenen Außenseite auf. Die ebenen Abschnitte und die gekrümmten Abschnitte bilden somit eine Art Treppe.

Die Außenseite des Lichtleiters weist im Bereich der Hauptabstrahlrichtung eine Aussparung auf, dessen Grenzfläche einen solchen Winkel zur Hauptabstrahlrichtung bildet, dass das durch die Eintrittsfläche eingekoppelte Licht der Leuchtdiode an dieser Grenzfläche total reflektiert wird. Die Form und die Tiefe der Aussparung sind dabei so gewählt, dass das Licht parallel zur Außenseite reflektiert wird und vorzugsweise homogen im Lichtleiter verteilt wird. Insbesondere ist die Grenzfläche der Aussparung nicht geradlinig, sondern kann einen gekrümmten Verlauf aufweisen.

Ferner kann die Eintrittsfläche eine Wölbung aufweisen, so dass durch Brechung an der Eintrittsfläche möglichst viel Licht auf die Aussparung gelenkt wird. In diesem Fall ist die Form der Aussparung an die Wölbung der Eintrittsfläche angepasst, so dass die Lichtintensität an allen gekrümmten Abschnitten nahezu gleich ist.

Dadurch, dass die ebenen Abschnitte parallel zur Außenseite sind und das reflektierte Licht ebenfalls parallel zur Außenseite verläuft, findet keine Reflexion oder Transmission an den ebenen Abschnitten statt. Im Gegensatz dazu wird das Licht an den gekrümmten Abschnitten total reflektiert. Die gekrümmten Abschnitte weisen eine solche vorgegebene Krümmung auf, dass das Licht in einen vorgegebenen Winkelbereich reflektiert wird. Das reflektierte Licht verlässt anschließend den Lichtleiter durch die Außenseite. Der Winkelbereich ist vorteilhaft so groß, dass die gekrümmten Abschnitte von einem Verkehrsteilnehmer aus unterschiedlichen Winkeln erkennbar sind.

Ein von außen gegen die Hauptabstrahlrichtung schauender Betrachter sieht im Betrieb der Fahrradleuchte die gekrümmten Abschnitte als helle Bereiche. Die ebenen Abschnitte erscheinen dunkel. Es sind somit aus der Nähe leuchtende Bereiche und dunkle Bereiche abwechselnd auf der Rückleuchte zu erkennen. Bei einiger Entfernung kann das menschliche Auge die leuchtenden Bereiche nicht mehr trennen, so dass die Leuchte den Eindruck eines leuchtenden Balkens hervorruft. Das Verhältnis von hellen Bereichen zu dunklen Bereichen hängt von der Gestaltung der ebenen und gekrümmten Abschnitte ab.

In einer weiteren vorteilhaften Ausbildung sind die gekrümmten Abschnitte so geformt, dass auftreffendes Licht jeweils in den gleichen Winkelbereich von -30° bis 90°, bevorzugt -20° bis 80°, zur Hauptstrahlrichtung reflektiert wird. Der negative Winkel kennzeichnet dabei die Richtung zur Aussparung hin. Die Reflexion in jeweils den gleichen Winkelbereich von einem jeden gekrümmten Abschnitt aus, bedingt eine gleichmäßige Helligkeit eines jeden gekrümmten Abschnitts bei der Beobachtung durch einen Verkehrsteilnehmer. Dabei sollte der Winkelbereich möglichst groß sein, so dass die Rückleuchte aus einem möglichst großen rückwärtigen Bereich als waagerecht ausgedehnt erkannt werden kann. Eine Totalreflexion in einen Winkelbereich von über 30° zur Hauptabstrahlrichtung in Richtung der Aussparung ist aufgrund des vorliegenden Brechungsindizes des Lichtleitermaterials nicht möglich.

In einer weiteren Ausgestaltung der Erfindung weist die Aussparung die Form eines V oder eines gestuften V auf, wobei die Grenzflächen etwa einen Verteilwinkel von 35° bis 55° zur Hauptabstrahlrichtung bilden, vorzugsweise etwa 43° bis 47° zur Hauptabstrahlrichtung, besonders bevorzugt etwa 45°. Der genannte Verteilwinkel ermöglicht insbesondere eine homogene Verteilung des Lichtes in dem Lichtleiter parallel zu der Außenseite. Insbesondere ist die Grenzfläche der Aussparung nicht unbedingt geradlinig, sondern weist eine Krümmung in dem angegebenen Winkelbereich auf. Die Form eines gestuften V als Aussparung, wobei sich in der Aussparung Abschnitte etwa parallel zur Außenseite befinden, ermöglicht es, dass auch Licht im Bereich der Aussparung den Lichtleiter nach hinten verlässt.

In einer vorteilhaften Ausgestaltung ist der Lichtleiter im Wesentlichen symmetrisch zur Hauptabstrahlrichtung ausgebildet und vorzugsweise für eine waagerechte Anordnung an einem Zweirad vorgesehen. In dieser Ausführungsform weist der Lichtleiter nur eine geringe vertikale Ausdehnung, bevorzugt mit einer rechteckigen Form, auf. Somit stellen sich im Betrieb für einen rückwärtigen Betrachter die gekrümmten Abschnitte als vertikale Striche dar. Vorteilhaft ist zudem, dass das Verhältnis der gesamten Breite des Lichtleiters zur Höhe der gekrümmten Abschnitte groß ist. Die einem Betrachter hell erscheinenden gekrümmten Abschnitte liegen somit auf einer horizontalen Linie und lassen aufgrund des günstigen Verhältnisses schon früh eine horizontale Ausdehnung der Fahrradleuchte erkennen und erlauben somit eine gute Abstandseinschätzung. Für einen rückwärtigen Betrachter der sich außerhalb eines Winkelbereiches von 30° zur Hauptabstrahlrichtung befindet, sind nur die gekrümmten Abschnitte sichtbar, die sich auf derselben Seite der Hauptabstrahlrichtung wie der Betrachter befinden.

Gemäß einer weiteren zweckmäßigen Ausführungsform sind mindestens zwei Leuchtdioden und mindestens ein Lichtleiter mit mindestens zwei Aussparungen und mindestens zwei gestuften Abschnitten der Innenseite nebeneinander angeordnet. Im Prinzip handelt es sich bei dieser Ausführungsform um die Anordnung von zwei oder mehr der bisher beschriebenen Anordnungen nebeneinander zur Verbreiterung der Gesamtleuchte. Dabei können zwei gleichartige getrennte Lichtleiter oder aber ein entsprechend ausgeformter einstückiger Lichtleiter verwendet werden. Die Anordnung von mindestens zwei Leuchtdioden und mindestens einem Lichtleiter mit mindestens zwei das Licht umlenkenden Bereichen ermöglicht eine einfache Verbreiterung der Rückleuchte bei gleicher maximaler Ausdehnung des Lichtleiters in der Hauptabstrahlrichtung. Erfindungsgemäß sollen jedoch möglichst wenige Leuchtdioden nebeneinander angeordnet sein, vorzugsweise 2 Leuchtdioden.

Ebenfalls vorteilhaft ist es, wenn sich der Lichtleiter über die gesamte Breite der Rückleuchte erstreckt, also die Breite der Rückleuchte bestimmt bzw. die für die Rückleuchte vorgesehene Breite vollständig ausnutzt. Bei Ausnutzung der gesamten Breite der Rückleuchte ist der Effekt einer scheinbaren waagerechten Ausdehnung der Lichtquelle am größten.

In einer besonders bevorzugten Ausführungsform weisen die gekrümmten Abschnitte einen Abstand von höchstens 4 mm zueinander auf, vorzugsweise sogar nur maximal 2 mm. Bei einem Abstand von 4 mm ist ein günstiges Verhältnis von Anzahl der gekrümmten Fläche mit im Betrieb genügend hoher Helligkeit zur Tiefe des Lichtleiters möglich.

In einer weiteren Ausführungsform ist der Lichtleiter oberhalb oder unterhalb eines Rückstrahlbereichs angeordnet und das Verhältnis der Höhe des Rückstrahlbereichs zur Höhe des Lichtleiters beträgt vorzugsweise höchstens 5:1. Bei einem solchen Verhältnis ist eine kompakte Bauform der Rückleuchte möglich und bei entsprechender Höhe des Lichtleiters eine genügend große Helligkeit der Rückleuchte gegeben.

Ferner ist es vorteilhaft, wenn die Leuchtdiode rotes Licht emittiert und das Material des Lichtleiters transparent zumindest für rotes Licht ist, vorzugsweise jedoch für den gesamten Bereich des sichtbaren Lichts transparent ist. Auf diese Weise kann Kunststoff mit ähnlichen Eigenschaften wie Glas für den Lichtleiter eingesetzt werden. Als Lichtquelle kommen insbesondere Hochleistungsdioden, die rotes Licht abstrahlen, in Betracht. Bei dieser Kombination kann eine hohe Lichtausbeute bei geringem Stromverbrauch erreicht werden.

Besonders vorteilhaft ist es, wenn der Lichtleiter eine maximale Ausdehnung in Hauptabstrahlrichtung von höchstens 10mm, vorzugsweise höchstens 5 mm, besitzt. Ein solcher Lichtleiter ermöglicht eine sehr flache Baumform der gesamten Rückleuchte.

Bevorzugte Ausführungsbeispiele der Erfindung, auf welche diese jedoch nicht beschränkt ist, werden im Folgenden anhand der Zeichnungen beschrieben und näher erläutert, und zwar zeigen:
Fig. 1: einen schematischen Schnitt durch einen halben Lichtleiter einer erfindungsgemäßen Rückleuchte,
Fig. 2: einen schematischen Schnitt durch einen Lichtleiter und zwei Leuchtdioden einer erfindungsgemäßen Rückleuchte mit zwei Leuchtdioden und
Fig. 3: eine schematische Ansicht einer erfindungsgemäßen Rückleuchte entgegen der Hauptabstrahlrichtung.

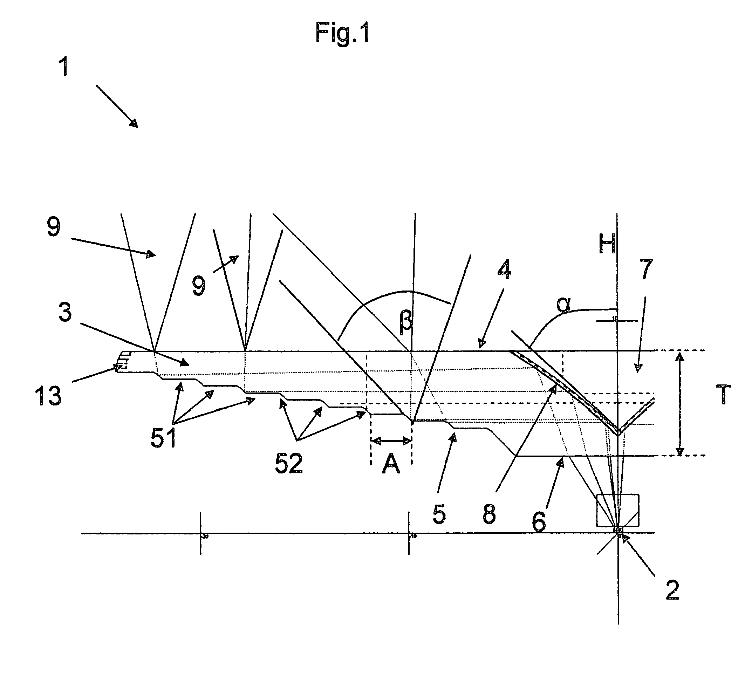

Fig. 1 zeigt einen schematischen Schnitt durch einen halben Lichtleiter einer Rückleuchte 1 mit einer Leuchtdiode 2 und einem Lichtleiter 3, sowie angedeutet durch einige beispielhafte gestrichelte Linien den Strahlengang des Lichts. Der Lichtleiter 3 weist eine ebene Außenseite 4 und eine stufenförmige Innenseite 5 auf. Die Innenseite 5 des Lichtleiters 3 weist in dem Gebiet der Hauptabstrahlrichtung H eine Eintrittsfläche 6 auf, durch die das Licht der Leuchtdiode 2 in den Lichtleiter 3 eintritt.

In der ebenen Außenseite 4 befindet sich eine Aussparung 7, an deren Grenzfläche 8 das Licht totalreflektiert wird. Die Eintrittsfläche 6 und die Grenzfläche 8 der Aussparung 7 sind dabei so geformt, dass das Licht nahezu parallel zur ebenen Außenseite 4 in den Lichtleiter 3 reflektiert wird.

Die Innenseite 5 des Lichtleiters 3 ist von der Eintrittsfläche 6 ausgehend treppenartig mit zur Außenseite 4 parallelen ebenen Abschnitten 51 und die ebenen Abschnitte 51 verbindenden gekrümmten Abschnitten 52 abgestuft. An den ebenen Abschnitten 51 wird das von der Grenzfläche der Aussparung 7 reflektierte Licht 8 nicht reflektiert oder transmittiert, da es im Wesentlichen parallel zu diesen verläuft. Bevorzugt ist die Aussparung 7 so geformt, dass das an der Grenzfläche 8 reflektierte Licht alle gekrümmten Abschnitte 52 homogen verteilt erreicht. An den gekrümmten Abschnitten 52 wird das Licht wiederum total reflektiert und verlässt durch die Außenseite 4 den Lichtleiter 3 in Teillichtbündeln 9. Die gekrümmten Abschnitte 52 sind dabei so geformt, dass das reflektierte Licht in einen Öffnungswinkel β von mindestens -20° bis 80°, bevorzugt - 30° bis 90°, zu der Hauptabstrahlrichtung reflektiert wird, wobei der negative Winkel die Richtung zur Aussparung kennzeichnet. An allen gekrümmten Abschnitten 52 wird das Licht gleich reflektiert, so dass für einen rückwärtigen Beobachter alle gekrümmten Abschnitte 52 nahezu gleich hell erscheinen.

Die Krümmung der gekrümmten Abschnitte 52 sorgt dafür, dass das Licht in einen bestimmten Winkelbereich β, reflektiert wird. Für einen rückwärtigen Betrachter in diesem Winkelbereich β erscheinen die gekrümmten Abschnitte 52 als helle vertikale Streifen. Die ebenen Abschnitte 51 erscheinen für den rückwärtigen Betrachter dunkel.

Die Aussparung 7 hat bevorzugt die Form eines V. Dabei ist jedoch die Grenzfläche 8 nicht unbedingt geradlinig, sie kann auch eine Krümmung aufweisen und wird durch den Verteilwinkel α zur Hauptabstrahlrichtung bestimmt. Der Verteilwinkel α liegt bevorzugt in einem Wertebereich zwischen 35° und 55°, vorzugsweise bei etwa 45°.

Die gekrümmten Abschnitte 52 weisen in einer bevorzugten Ausführungsform einen Abstand A von mindestens 4 mm zueinander auf und die Ausdehnung des Lichtleiters 3 in Hauptabstrahlrichtung H beträgt nicht mehr als 10 mm, vorzugsweise maximal 5 mm.

In an sich bekannter Weise wird das Licht der Leuchtdiode 2 von der Grenzfläche 8 der Aussparung zur Seite der Rückleuchte 1 reflektiert. Außerdem wird ein Teil des von der Leuchtdiode 2 emittierten Lichts durch geeignete nicht dargestellte Mittel nach vorn oben reflektiert, so dass der Fahrer den Betriebszustand der Rückleuchte während der Fahrt in an sich bekannter Weise durch einen Blick nach hinten überprüfen kann.

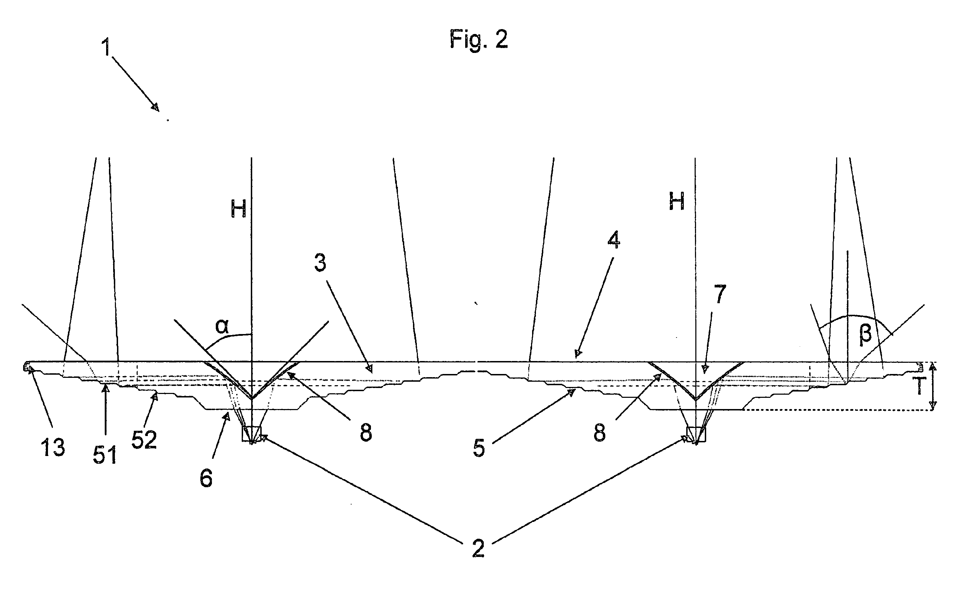

In Figur 2 ist ein schematischer Schnitt durch einen Lichtleiter und zwei Leuchtdioden einer besonders bevorzugten Ausführungsform einer erfindungsgemäßen Rückleuchte 1 mit zwei Leuchtdioden 2 gezeigt. Den zwei Leuchtdioden 2 ist ein Lichtleiter 3 zugeordnet, der von zwei Eintrittsflächen 6 aus Abstufungen mit ebenen 51 und gekrümmten 52 Abschnitten aufweist. Bei dieser Anordnung sind eine Vielzahl von gekrümmten Abschnitten 52 und eine geringe Tiefe T des Lichtleiters 3 in Hauptabstrahlrichtung H möglich.

Das Licht der Leuchtdioden 2 koppelt an den Eintrittsflächen 6 in den Lichtleiter 3 ein und wird an den Grenzflächen der Aussparungen 7 jeweils in zwei entgegengesetzte Richtungen parallel zur Außenseite 4 reflektiert. An den gekrümmten Abschnitten 52 wird das Licht wiederum total reflektiert und verlässt den Lichtleiter 3 an der ebenen Außenseite 4. Das reflektierte Licht eines jeden gekrümmten Abschnittes 52 verlässt den Lichtleiter 3 in einem Winkelbereich β zur Hauptabstrahlrichtung H. Der Winkelbereich β ist nicht symmetrisch zur Hauptabstrahlrichtung verteilt, so dass ein Beobachter außerhalb eines Winkelbereiches von 30° zur Hauptabstrahlrichtung H nur abschnittsweise die gekrümmten Abschnitte 5 2 als helle Bereiche sieht.

Ein Teil des Lichtes verlässt nach der Reflektion an der Grenzfläche 8 der Aussparung 7 den Lichtleiter 3 durch Streumittel 13und wird so gestreut, dass die Rückleuchte in an sich bekannter Weise auch aus einem Bereich quer zur Fahrtrichtung erkennbar ist, wie dies z.B. in Deutschland gesetzlich vorgeschrieben ist.

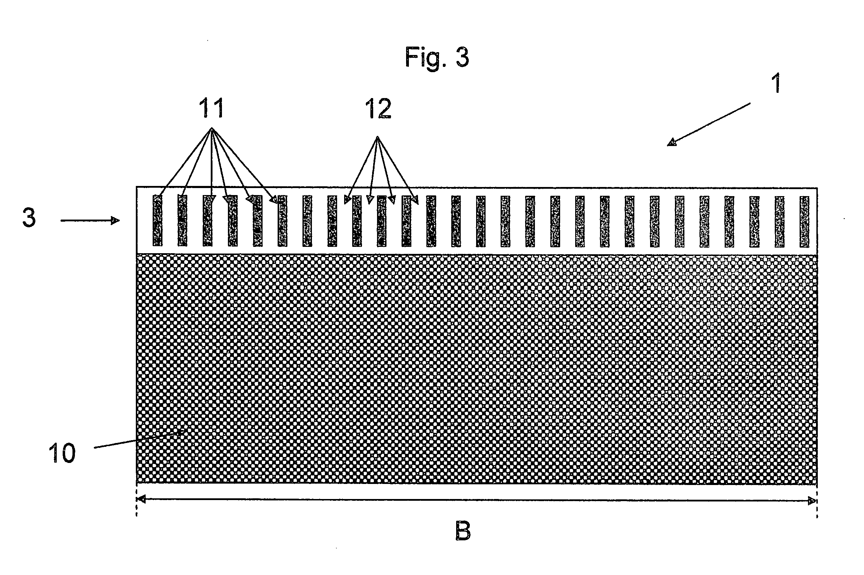

Figur 3 zeigt eine schematische Ansicht entgegen der Hauptabstrahlrichtung H einer erfindungsgemäßen Rückleuchte aus der Sicht eines rückwärtigen Betrachters. In dieser Ausführungsform ist der Lichtleiter 3 über einem Rückstrahlbereich 10 angeordnet. Helle Abschnitte 11 wechseln sich beim Betrieb der Leuchte mit dunklen Abschnitten 12 ab. Aus größerer Entfernung betrachtet ergibt sich das Bild eines leuchtenden Balkens der Breite B.

Eine Rückleuchte gemäß der vorliegenden Erfindung kann durch ihr quasi flächiges Licht zur Verbesserung der Sicherheit im Straßenverkehr beitragen und eignet sich besonders für Rückleuchten an Zweirädern, die am hintern Ende eines Gepäckträgers angebracht werden.

### Bezugszeichenliste

- 1: Rückleuchte
- 2: Leuchtdiode
- 3: Lichtleiter
- 4: ebene Außenseite
- 5: stufenförmige Innenfläche
- 6: Eintrittsfläche
- 7: Aussparung
- 8: Grenzfläche
- 9: Teillichtbündel
- 10: Rückstrahlbereich
- 11: helle Abschnitte
- 12: dunkle Abschnitte
- 13: Streumittel
- 51: erste ebene Abschnitte
- 52: zweite gekrümmte Abschnitte

- A: Abstand
- B: Breite
- H: Hauptabstrahlrichtung
- T: Tiefe
- α: Verteilwinkel
- β: Winkelbereich

## Patentansprüche

1. Rückleuchte (1) für ein Zweirad mit mindestens einer Leuchtdiode (2) mit einer Hauptabstrahlrichtung (H), mindestens einem der Leuchtdiode (2) zugeordneten Lichtleiter (3), der sich in der Hauptabstrahlrichtung (H) vor der Leuchtdiode (2) befindet und im wesentlichen in einer Ebene senkrecht zur Hauptabstrahlrichtung (H) angeordnet ist,
wobei
der Lichtleiter (3) so ausgebildet ist, dass er zumindest einen Teil des in der Leuchtdiode (2) erzeugbaren Lichtes seitlich ablenkt und in verschiedene voneinander beabstandete Teillichtbündel (9) unterteilt wieder umlenkt mit einer vorgebbaren Intensitätsverteilung in einen vorgebbaren Winkelbereich (β) um die Hauptabstrahlrichtung (H).
**dadurch gekennzeichnet,**
**dass** der Lichtleiter (3) eine im wesentlichen ebene Außenseite (4) aufweist und eine von der Leuchtdiode (2) ausgehend gestufte Innenseite (5) aus einer Mehrzahl von etwa parallel zu der Außenseite (4) mit abnehmenden Abständen verlaufenden ebenen Abschnitten (S1), die durch gekrümmte Abschnitte (52) miteinander verbunden sind, so dass ebene (51) und gekrümmte (52) Abschnitte eine Art Treppe bilden, und wobei in der Außenseite (4) in der Hauptabstrahlrichtung vor der Leuchtdiode (2) eine Aussparung (7) ausgebildet ist, deren Grenzflächen (8) in einem solchen Verteilwinkel (α) zur Hauptabstrahlrichtung (H) verlaufen und eine solche Form und Tiefe haben, dass von der Leuchtdiode ausgesandtes Licht in den Lichtleiter (3) totalreflektiert wird, und zwar etwa parallel zur Außenseite (4) des Lichtleiters (3), so dass Licht auf jeden gekrümmten Abschnitt (52) fällt und dort mit einer der Krümmung entsprechenden Intensitätsverteilung und/oder Winkelverteilung in Richtung Außenseite (4) totalreflektiert wird, so dass es aus der Außenseite (4) austritt.

2. Rückleuchte (1) nach Anspruche 1,
**dadurch gekennzeichnet, dass**
die gekrümmten Abschnitte (52) so geformt sind, dass auftreffendes Licht jeweils in einen vorgebbaren, vorzugsweise jeweils den gleichen, Winkelbereich (β) zur Hauptabstrahlrichtung (H) reflektiert wird, vorzugsweise einen Winkelbereich (β) von mindestens -20° bis 80°, insbesondere etwa -30° bis 90°, wobei der negative Winkelbereich, die Richtung zur Aussparung kennzeichnet.

3. Rückleuchte (1) nach Anspruch 1 oder 2,
**dadurch gekennzeichnet,**
**dass** die Aussparung (7) die Form eines V oder eines gestuften V aufweist, wobei die Grenzflächen (8) etwa einen Verteilwinkel (α) von 35° bis 55° bilden, vorzugsweise etwa 45°.

4. Rückleuchte (1) nach Anspruch 1 bis 3,
**dadurch gekennzeichnet, dass**
der Lichtleiter (3) im Wesentlichen symmetrisch zur Hauptabstrahlrichtung (H) ausgebildet ist und vorzugsweise für eine waagerechte Anordnung an einem Zweirad ausgebildet ist.

5. Rückleuchte (1) nach einem der vorhergehenden Ansprüche, wobei mindestens zwei Leuchtdioden (2) und mindestens ein Lichtleiter (3) zur Umlenkung und Verteilung von Licht vorhanden sind.

6. Rückleuchte (1) nach einem der vorhergehenden Ansprüche, wobei der Lichtleiter (3) im Wesentlichen eine Breite (B) der Rückleuchte (1) definiert.

7. Rückleuchte (1) nach einem der Ansprüche 1 bis 6, wobei die gekrümmten Abschnitte (52) einen Abstand (A) von höchstens 4 mm, vorzugsweise höchstens 2 mm, zueinander haben.

8. Rückleuchte (1) nach einem der vorhergehenden Ansprüche, wobei der Lichtleiter (3) oberhalb oder unterhalb eines Rückstrahlbereichs (10) angeordnet ist.

9. Rückleuchte (1) nach einem der vorhergehenden Ansprüche, wobei die mindestens eine Leuchtdiode (2) flach und ohne Linse ausgebildet ist.

10. Rückleuchte (1) nach einem der vorhergehenden Ansprüche, wobei die mindestens eine Leuchtdiode (2) rotes Licht emittiert und das Material des Lichtleiters (3) transparent zumindest für rotes Licht ist.

11. Rückleuchte (1) nach einem der vorhergehenden Ansprüche, wobei der Lichtleiter (3) eine maximale Tiefe (T) von 10 mm, vorzugsweise höchstens 5 mm, besitzt.

## Claims

1. Rear light (1) for a bicycle, having at least one light-emitting diode (2) with a main emission direction (H) and at least one light guide (3) which is assigned to the light-emitting diode (2) and located in front of the light-emitting diode (2) in the main emission direction (H) and is substantially arranged in a plane perpendicular to the main emission direction (H), the light guide (3) being designed so that it laterally deflects at least a portion of the light which can be generated in the light-emitting diode (2) and, having subdivided it into different partial light bundles (9) spaced apart from one another, deflects it again, with a prescribable intensity distribution, into a prescribable angular range (β) about the main emission direction (H), **characterized in that** the light guide (3) has a substantially flat outer side (4) and an inner side (5) which is stepped starting from the light-emitting diode (2) and is composed of a plurality of flat sections (51) which run approximately parallel to the outer side (4) at decreasing spacings and which are interconnected by curved sections (52) such that flat (51) and curved (52) sections form a type of staircase, there being formed in the outer side (4) in front of the light emitting diode (2) in the main emission direction a cutout (7) whose boundary surfaces (8) run such a distribution angle (α) to the main emission direction (H), and have such a shape and depth that light emitted by the light-emitting diode is totally reflected in the light guide (3), specifically approximately parallel to the outer side (4) of the light guide (3), so that light falls on each curved section (52) and is there totally reflected with an intensity distribution corresponding to the curvature and/or an angular distribution in a direction of the outer side (4) so that it exits from the outer side (4).

2. Rear light (1) according to Claim 1, **characterized in that** the curved sections (52) are shaped such that incident light is respectively reflected into a prescribable angular range (β), preferably respectively the same, to the main emission direction (H), preferably an angular range (β) of at least -20° to 80°, in particular approximately -30° to 90°, the negative angular range characterizing the direction to the cutout.

3. Rear light (1) according to either of Claims 1 and 2, **characterized in that** the cutout (7) has the shape of a V or of a stepped V, the boundary surfaces (8) approximately forming a distribution angle (α) of 35° to 55°, preferably approximately 45°.

4. Rear light (1) according to Claims 1 to 3, **characterized in that** the light guide (3) is formed substantially symmetrically relative to the main emission direction (H) and is preferably designed for a horizontal arrangement on a bicycle.

5. Rear light (1) according to one of the preceding claims, in which at least two light-emitting diodes (2) and at least one light guide (3) are present to deflect and distribute light.

6. Rear light (1) according to one of the preceding claims, in whicht he light guide (3) substantially defines a width (B) of the rear light (1).

7. Rear light (1) according to one of Claims 1 to 6, in which the curved sections (52) have a mutual spacing (A) of at most 4 mm, preferably at most 2 mm.

8. Rear light (1) according to one of the preceding claims, in which the light guide (3) is arranged above or below a retroreflection area (10).

9. Rear light (1) according to one of the preceding claims, in which the at least one light-emitting diode (2) is designed to be flat and without a lens.

10. Rear light (1) according to one of the preceding claims, in which the at least one light-emitting diode (2) emits red light, and the material of the light guide (3) is transparent, at least to red light.

11. Rear light (1) according to one of the preceding claims, in which the light guide (3) has a maximum depth (T) of 10 mm, preferably at most 5 mm.

## Revendications

1. Feu arrière (1) pour deux roues comprenant au moins une diode électroluminescente (2) ayant une direction de rayonnement principale (H), au moins un guide de lumière (3) associé à la diode électroluminescente (2), lequel guide est situé dans la direction de rayonnement principale (H) en face de la diode électroluminescente (2) et est disposé sensiblement dans un plan perpendiculaire à la direction de rayonnement principale (H),
le guide de lumière (3) étant conçu de manière à ce qu'il dévie latéralement au moins une partie de la lumière pouvant être générée dans la diode électroluminescente (2) et à ce qu'il dévie à nouveau, en les répartissant, différents faisceaux lumineux partiels (9) espacés les uns des autres avec une distribution d'intensité prédéterminée dans un domaine angulaire prédéterminé (β) autour de la direction de rayonnement principale (H),
**caractérisé en ce que** le guide de lumière (3) comprend une face extérieure sensiblement plane (4) et une face intérieure (5) renforcée partant de la diode électroluminescente (2) et constituée d'une pluralité de parties (51) planes approximativement parallèles à la face extérieure (4) s'étendant à des intervalles se réduisant, lesquelles parties sont reliées les unes aux autres par l'intermédiaire de parties incurvées (52) de telle manière que les parties planes (51) et incurvées (52) forment une sorte d'escalier, et un évidement (7) étant formé dans la face extérieure (4) dans la direction de rayonnement principale, en face de la diode électroluminescente (2), évidement dont les surfaces de délimitation (8) s'étendent selon un angle de répartition (α) tel par rapport à la direction de rayonnement principale (H) et présentent une forme et une profondeur telles que la lumière émise par la diode électroluminescente soit soumise à une réflexion totale dans le guide de lumière (3), et cela pratiquement parallèlement à la face extérieure (4) du guide de lumière (3), de telle manière que de la lumière soit incidente sur chaque partie incurvée (52) et y soit soumise à une réflexion totale avec une distribution d'intensité correspondant à la courbure et/ou avec une répartition angulaire orientée vers la face extérieure (4), de manière à ce qu'elle sorte de la face extérieure (4).

2. Feu arrière (1) selon la revendication 1, **caractérisé en ce que** les parties incurvées (52) sont formées de manière à ce que la lumière incidente soit chaque fois réfléchie dans un domaine angulaire (β) prédéterminé, de préférence chaque fois identique, par rapport à la direction de rayonnement principale (H), de préférence un domaine angulaire (β) d'au moins -20° à 80°, et plus particulièrement, d'environ -30° à 90°, le domaine angulaire négatif caractérisant la direction de l'évidement.

3. Feu arrière (1) selon la revendication 1 ou 2, **caractérisé en ce que** l'évidement (7) présente la forme d'un V ou d'un V en gradins, les surfaces de délimitation (8) formant un angle de répartition (α) de 35° à 55°, de préférence d'environ 45°.

4. Feu arrière (1) selon l'une quelconque des revendications 1 à 3, **caractérisé en ce que** le guide de lumière (3) est conçu de manière à être sensiblement symétrique par rapport à la direction de rayonnement principale (H) et **en ce qu'**il est de préférence conçu pour un agencement horizontal sur un deux roues.

5. Feu arrière (1) selon l'une quelconque des revendications précédentes, dans lequel au moins deux diodes électroluminescentes (2) et au moins un guide de lumière (3) sont prévus pour dévier et répartir la lumière.

6. Feu arrière (1) selon l'une quelconque des revendications précédentes, dans lequel le guide de lumière (3) définit sensiblement une largeur (B) du feu arrière (1).

7. Feu arrière (1) selon l'une quelconque des revendications 1 à 6, dans lequel les parties incurvées (52) sont séparées les unes des autres d'une distance (A) d'au plus 4 mm, et de préférence, d'au plus 2 mm.

8. Feu arrière (1) selon l'une quelconque des revendications précédentes, dans lequel le guide de lumière (3) est disposé au-dessus ou en dessous d'une région de réflexion (10).

9. Feu arrière (1) selon l'une quelconque des revendications précédentes, dans lequel l'au moins une diode électroluminescente (2) est plane et exempte de lentille.

10. Feu arrière (1) selon l'une quelconque des revendications précédentes, dans lequel l'au moins une diode électroluminescente (2) émet de la lumière rouge et le matériau du guide de lumière (3) est transparent vis-à-vis d'au moins la lumière rouge.

11. Feu arrière (1) selon l'une quelconque des revendications précédentes, dans lequel le guide de lumière (3) présente une profondeur maximale (T) de 10 mm et de préférence, d'au plus 5 mm.
